(19) Europäisches Patentamt
European Patent Office
Office européen des brevets

(11) Publication number: 0 278 731
A2

(12) EUROPEAN PATENT APPLICATION

(21) Application number: 88301075.3

(22) Date of filing: 09.02.88

(51) Int. Cl.$^4$: C 08 K 5/54
C 08 L 83/04

(30) Priority: 09.02.87 JP 27545/87

(43) Date of publication of application:
17.08.88 Bulletin 88/33

(84) Designated Contracting States: DE FR GB

(71) Applicant: Shin-Etsu Chemical Co., Ltd.
6-1, Otemachi 2-chome
Chiyoda-ku Tokyo 100 (JP)

(72) Inventor: Itoh, Kunio
19-1, Isobe 3-chome
Annaka-shi Gunma-ken (JP)

Takahashi, Masaharu
10-28, Isobe 3-chome
Annaka-shi Gunma-ken (JP)

Yoshida, Takeo
1841-11, Higashikamiisobe
Annaka-shi Gunma-ken (JP)

Takita, Ken-ichi
1610, Nishikamiisobe
Annaka-shi Gunma-ken (JP)

(74) Representative: Bizley, Richard Edward et al
BOULT, WADE & TENNANT 27 Furnival Street
London EC4A 1PQ (GB)

(54) **A silicone rubber composition.**

(57) The silicone rubber composition is characterized by the formulation of a novel organic peroxide as the curing agent which is a bis(4-organosilyl-substituted and 2- and/or 6-substituted benzoyl) peroxide such as bis(2-methyl-4-trimethylsilyl benzoyl) peroxide and bis(2,6-dimethyl-4-trimethylsilyl benzoyl) peroxide. The silicone rubber composition is suitable for hot air vulcanization without compression to give a cured rubber having no surface tackiness and free from voids. The cured silicone rubber article is outstandingly superior in respect of the resistance against aging in high-temperature steam and low permanent compression set to the silicone rubber cured with 2,4-dichlorobenzoyl peroxide which is the only peroxide curing agent usable in hot air vulcanization.

EP 0 278 731 A2

## Description

### A SILICONE RUBBER COMPOSITION

The present invention relates to a silicone rubber composition or, more particularly, to a silicone rubber composition based on an alkenyl group-containing organopolysiloxane and containing a novel crosslinking agent, which is also included in the invention.

As is well known, cured silicone rubber articles are widely used in a variety of application fields by virtue of their generally very excellent heat and cold resistance and electric properties. Silicone rubber articles are produced by shaping and curing or vulcanizing in silicone rubber composition compounded with a crosslinkable organopolysiloxane as the base ingredient in several different fabrication processes depending on the types of the silicone rubber compositions and the intended silicone rubber articles.

For example, vulcanization or curing of a silicone rubber composition is performed by several methods differing in the mechanism of the crosslinking reaction depending on the type of the silicone rubber composition and the properties which the cured silicone rubber article should have. The most conventional among the vulcanization methods of silicone rubber compositions is the so-called peroxide curing in which a silicone rubber compound based on an organopolysiloxane is admixed with an organic peroxide and heated to effect crosslinking of the organopolysiloxane.

A variety of organic peroxides have been used hitherto as a curing agent in silicone rubber compositions including benzoyl peroxide, 4-chlorobenzoyl peroxide, 2,4-dichlorobenzoyl peroxide, dicumyl peroxide, di-tert-butyl peroxide, 2,5-dimethyl-2,5-di(tert-butyl peroxy) hexane, tert-butyl perbenzoate and tert-butyl cumyl peroxide. Silicone rubber compositions admixed with these organic peroxides as the curing agent are vulcanized usually by heating under compression in a press since otherwise the cured silicone rubber articles are subject to occurrence of voids.

It is, however, sometimes desired to perform the vulcanization of a silicone rubber composition without compression or under normal pressure in a hot air oven as in continuous extrusion molding for the manufacture of tubes and sheets of silicone rubbers or silicone rubber-insulated electric wires. According to the general understanding in the art of silicone rubbers, 2,4-dichlorobenzoyl peroxide is the only organic peroxide which can be used as a curing agent in a silicone rubber composition to be used in the above mentioned hot air vulcanization process. 2,4-Dichlorobenzoyl peroxide, however, has several problems as a curing agent in silicone rubber compositions. For example, the peroxide as a chlorinated compound is corrosive towards metals in contact with the silicone rubber and the decomposition products may be toxic to the human body. Moreover, silicone rubber articles vulcanized with this peroxide are not totally satisfactory in respect of the relatively poor heat resistance in a hermetically sealed condition and the relatively large permanent compression set.

Several different organic peroxides have been proposed hitherto as a curing agent of silicone rubber compositions for hot air vulcanization free from the above mentioned problems and disadvantages in a silicone rubber composition formulated with 2,4-dichlorobenzoyl peroxide including tert-butyl peroxy octadecyl carbonate, tert-amyl peroxy-2,6,8-trimethyl-4-nonyl carbonate, tert-amyl peroxy octadecyl carbonate and other tertalkyl peroxy alkyl carbonates disclosed in U.S. Patent No. 4,061,704. A problem in the use of these peroxides is the relatively large molecular weights of the decomposition products thereof so that the decomposition products can hardly be separated from the cured silicone rubber article and some adverse influences on the heat resistance of the silicone rubber articles result.

On the other hand, hor-air vulcanizable silicone rubber compositions of an alternative type are known which can be crosslinked by the addition reaction or so-called hydrosilation reaction between an organopolysiloxane having silicon-bonded alkenyl, e.g., vinyl, groups and an organohydrogenpolysiloxane in the presence of a platinum catalyst. Silicone rubber compositions of this type are disadvantageous in respect of the relatively short plot life or shelf life after compounding in comparison with the peroxide-curable silicone rubber compositions and the phenomenon of scorch to cause loss of moldability so that the application thereof is limited to several special fields without versatility.

The silicone rubber composition of the present invention comprises, in admixture:

(A) an organopolysiloxane represented by the average unit formula

$R^1_aR^2_bSiO_{(4-a-b)/2}$, (I)

in which $R^1$ is a monovalent hydrocarbon group free from aliphatic unsaturation, $R^2$ is an alkenyl group, the subscript a is a positive number in the range from 1.8 to 2.2 and the subscript b is zero or a positive number not exceeding 0.1; and

(B) an organosilyl-substituted benzoyl peroxide compound represented by the general formula

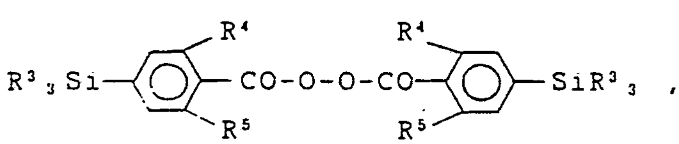

.... (II)

in which each $R^3$ is, independently from the others, a monovalent hydrocarbon group, each $R^4$ is,

independently from the other, a hydrogen atom, methyl group, ethyl group, methoxy group or ethoxy group and each $R^5$ is, independently from the other, a methyl group, ethyl group, methoxy group or ethoxy group, in an amount effective to crosslink the molecules of the component (A) by heating.

The inventive silicone rubber composition thus comprises a specific benzoyl peroxide derivative as the curing agent, which is a 4,4′-di(triorganosilyl)-substituted benzoyl peroxide having one or two substituent groups at the 2- and/or 6-positions relative to the carbonyl group in each of the benzene rings.

The base ingredient as the component (A) in the inventive silicone rubber composition is an organopolysiloxane represented by the average unit formula

$R^1_aR^2_bSiO_{(4-a-b)/2}$,

in which each symbol has the meaning defined above. More particularly, $R^1$ is a monovalent hydrocarbon group free from aliphatic unsaturation and is exemplified by alkyl groups, e.g., methyl, ethyl, propyl and butyl groups, cycloalkyl groups, e.g., cyclohexyl group, and aryl groups, e.g., phenyl and tolyl groups, as well as those substituted groups obtained by replacing a part or all of the hydrogen atoms in the above named hydrocarbon groups with inert substituents, e.g. halogen atoms or cyano groups, for example, such as haloalkyl, e.g. chloromethyl or 3,3,3-trifluoropropyl and cyanoalkyl, e.g. 2-cyanoethyl groups.

$R^2$, on the other hand, is an alkenyl group (which term encompasses cycloalkenyl groups) exemplified by vinyl, allyl and cyclopentadienyl groups and, preferably, is a vinyl group. $R^2$ may contain, for example, from 1 to 4 or 1 to 5 carbon atoms. The subscript a is a positive number in the range from 1.8 to 2.2 and b is zero or a positive number not exceeding 0.1. As is indicated by the value of the subscript b which is preferably not zero, the organopolysiloxane should have at least one alkenyl or, preferably, vinyl group in a molecule. It is also preferable that at least 50% in number of the hydrocarbon groups denoted by $R^1$ are methyl groups. The vinyl groups may be introduced into the organopolysiloxane preferably in the form of several types of siloxane units including vinyl methyl siloxane units ViMeSiO, vinyl dimethyl siloxane units $ViMe_2SiO_{0.5}$, trivinyl siloxane units $Vi_3SiO_{0.5}$, vinyl methyl phenyl siloxane units $ViMePhSiO_{0.5}$ and the like, for example, in which Vi, Me and Ph denote vinyl, methyl and phenyl groups, respectively. The $R^1$ groups are not necessarily all identical, and the same applies also to the $R^2$ groups.

The organopolysiloxane accordingly is preferably composed mainly or mostly of dimethyl siloxane units $Me_2SiO$ in combination with minor amounts of other siloxane units including diphenyl siloxane units $Ph_2SiO$, methyl phenyl siloxane units MePhSiO and methyl ethyl siloxane units MeEtSiO, Et being an ethyl group, in a molar proportion of 20% or smaller and the above mentioned vinyl-containing siloxane units in a molar proportion not to exceed 10% in any event.

The organopolysiloxane should preferably have a degree of polymerization of at least 500 in order that the cured silicone rubber obtained from the composition may have a sufficiently high mechanical strength. Needless to say, the mechanical strength of the cured silicone rubber can be improved by compounding the silicone rubber composition with a substantial amount of a reinforcing filler which is preferably a finely divided silica powder having a specific surface area of 100 to 400 $m^2/g$ as determined by the BET method and an average particle diameter of 1 to 20 nm exemplified by fumed silica fillers manufactured by the dry process. The amount of the reinforcing silica filler in the silicone rubber composition is usually in the range from 20 to 100 parts by weight per 100 parts by weight of the organopolysiloxane as the component (A). It is of course optional that the silicone rubber composition is admixed with various kinds of non-reinforcing fillers such as quartz powder, diatomaceous earth, light calcium carbonate, aluminium oxide, zinc oxide, iron oxide, graphite powder and fibrous fillers, for example, in addition to the above mentioned reinforcing fillers. When the silicone rubber composition is compounded with these fillers, it is preferable that the filler is blended in advance with diphenyl silane diol or low molecular organopolysiloxanes having hydroxy or alkoxy groups at the molecular chain ends, for example (usually called a softening agent) followed, if necessary, by a heat treatment prior to compounding with the organopolysiloxane as the component (A).

The component (B) in the inventive silicone rubber composition is a derivative of benzoyl peroxide represented by the general formula

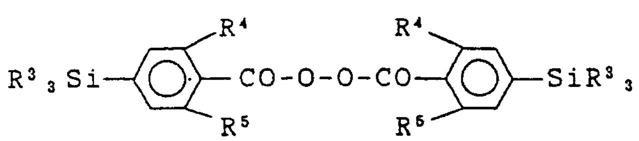

in which each symbol has the meaning defined above. In particular, each $R^3$ is, independently from the others, a monovalent hydrocarbon group exemplified by alkyl groups, e.g., methyl, ethyl, propyl and butyl groups, alkenyl groups, e.g., vinyl and allyl groups, aryl groups, e.g., phenyl and tolyl groups, and aralkyl groups, e.g., benzyl and 2-phenylethyl groups, as well as those substituted groups obtained by replacing a part or all of the hydrogen atoms in the above named hydrocarbon groups with inert substituents, e.g. halogen atoms or cyano groups, for example, and $R^4$ and $R^5$ are each a methyl, ethyl, methoxy or ethoxy group but either one of them can be a hydrogen atom.

The above defined derivatives of benzoyl peroxide are novel compounds and examples of them include: bis(2-methyl-4-trimethylsilyl benzoyl) peroxide; bis(2-methyl-4-dimethylvinylsilyl benzoyl) peroxide; bis 2(ethyl-4-trimethylsilyl benzoyl) peroxide; bis(2,6-dimethyl-4-trimethylsilyl benzoyl) peroxide; bis (2,6-diethyl-4-trimethylsilyl benzoyl) peroxide; bis(2-methoxy-4-trimethylsilyl benzoyl) peroxide and the like.

The invention includes the use of the novel benzoyl peroxide derivatives as organopolysiloxane crosslinking agents, it being envisaged that they could be used with other organopolysiloxanes than component A of the inventive composition.

These benzoyl peroxide derivatives can be synthesized by the reaction of the corresponding substituted benzoyl chloride and hydrogen peroxide in the presence of an acid acceptor such as sodium hydroxide, potassium hydroxide or pyridine according to the following reaction equation:

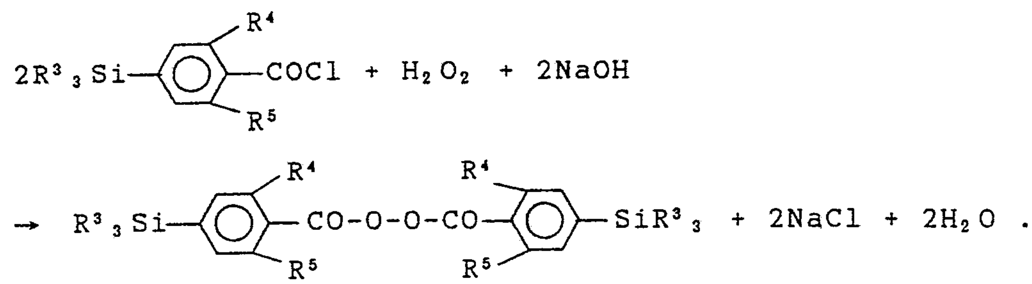

The silicone rubber composition of the present invention can be prepared by uniformly blending the above described components (A) and (B) together with other optional ingredients in a suitable blending machine such as two-roller mills, kneaders and the like. The amount of the benzoyl peroxide compound as the component (B) in the inventive composition is preferably in the range from 0.1 to 5 parts by weight per 100 parts by weight of the organopolysiloxane as the component (A).

The thus prepared silicone rubber composition can be cured by a heat treatment which can be performed under normal pressure in a hot air oven without compression. Accordingly, the inventive silicone rubber composition can be used for the manufacture of tubes, sheets, rubber-insulated electric wires and the like in a continuous process of extrusion molding or calendering followed by passing the continuous-length molded body through a hot air oven kept at a temperature in the range from 200 to 400° C. Curing is complete at this temperature usually within 10 seconds to 5 minutes depending on the shape and wall thickness of the molded body. The heating means in the oven may in principle be of any type including direction exposed electric heaters or infrared heaters and hot air. If necessary, steam vulcanization, hot liquid vulcanization and fluidized-bed vulcanization can be undertaken.

The cured silicone rubber articles which we have obtained in this manner have excellent properties without surface tackiness and occurrence of voids. By virtue of the excellent heat resistance in a hermetically sealed condition and very low permanent compression set of the cured rubber, the inventive silicone rubber composition is very useful as a material for the manufacture of ignition cables, metal-sheath cables, plastic-sheath cables, hoses and tubes in automobiles and the like in addition to general-purpose rubber tubes and rubber-insulated electric wires.

The following is a description of the synthetic procedure for the preparation of the benzoyl peroxide compound as the component (B) and the inventive silicone rubber composition by way of examples, in which the term "parts" always refers to "parts by weight" and the values of viscosity are all those obtained by the measurement at 25 °C.

Preparation 1.

Synthesis of bis(2-methyl-4-trimethylsilyl benzoyl) peroxide.

A mixture of 158 ml (2 moles) of pyridine and 150 ml of diethyl ether was chilled to -10 °C and 62.5 ml of a 30% aqueous solution of hydrogen peroxide (0.55 mole) were added dropwise to the mixture which was kept at a temperature of -10 °C or below by continued chilling. Thereafter, 1 mole of 2-methyl-4-trimethylsilyl benzoyl chloride was gradually added dropwise into the reaction mixture under vigorous agitation followed by further continued agitation for additional two hours. The reaction mixture was then neutralized by adding 10% sulfuric acid and the reaction product was extracted therefrom by use of a mixture of ether and pentane. The extract solution was washed successively with a dilute acid and an aqueous solution of sodium carbonate and at 0 °C or below and then with water at 5 °C followed by dehydration over anhydrous sodium sulfate. Evaporation of the solvents from the extract solution in a rotary evaporator gave a product which could be identified from the analytical results shown below to be bis(2-methyl-4-trimethylsilyl benzoyl) peroxide in a purity of at least 99%. The yield of this product was about 80% of the theoretical value.

Elementary analysis
Found
C 62.8%; H 6.7%; Si 13.6%
Calculated as $C_{22}H_{30}O_4Si_2$
C 63.8%; H 7.3%; Si 13.5%

Infrared absorption spectral bands
2970 $cm^{-1}$ ($CH_3$-Si & $CH_3$-aromatic nucleus);
1760 $cm^{-1}$ and 1790 $cm^{-1}$ (-CO-O-O-CO-);
1110 $cm^{-1}$ (Si-aromatic nucleus)

Preparation 2

Synthesis of bis (2,6-demethyl-4-trimethylsilyl benzoyl) peroxide.

Into a mixture of 125 g of a 25% by weight aqueous solution of sodium hydroxide and 110 g of an aqueous solution of 0.5 g of sodium dodecylbenzene sulfonate were added dropwise 34 g of a 60% by weight aqueous solution of hydrogen peroxide while keeping the temperature of the mixture at 0.5 °C. Then, 28.4 g of 2,6-dimethyl-4-trimethylsilyl benzoyl chloride were gradually added dropwise into the mixture kept at 0 to 5 °C under vigorous agitation followed by further continued agitated of the reaction mixture at 0 to 5 °C for additional two hours. The precipitates formed in the reaction mixture were collected by filtration with suction and repeatedly washed with water until the washing was no longer alkaline. The thus obtained reaction product, after drying at room temperature under reduced pressure, could be identified from the analyical results shown below to be bis(2,6-dimethyl-4-trimethylsilyl benzoyl) peroxide in a purity of 98%.

Elementary analysis
Found
C 64.9%; H 7.9%; Si 12.6%
Calculated as $C_{24}H_{34}O_4Si_2$
C 65.2%; H 7.7%; Si 12.7%

Infrared absorption spectral bands
2920 $cm^{-1}$ ($CH_3$-Si & $CH_3$-aromatic nucleus);
1760 $cm^{-1}$ and 1790 $cm^{-1}$ (-CO-O-O-CO-);
1105 $cm^{-1}$ (Si-aromatic nucleus)

Example 1

An organopolysiloxane compound was prepared by uniformly blending 100 parts of a gum-like methyl vinyl polysiloxane composed of 99.8% by moles of dimethyl siloxane units $Me_2SiO$, 0.175% by moles of methyl vinyl siloxane units MeViSiO and 0.025% by moles of vinyl dimethyl siloxane units $ViMe_2SiO_{0.5}$, 40 parts of a fumed silica filler (Aerosil 200, a product of Nippon Aerosil Co.) and 4 parts of diphenyl silane diol followed by a heat treatment at 150 °C for 4 hours and mastication on a two-roller mill to be imparted with plasticity.

A 100 parts portion of the thus prepared organopolysiloxane compound was taken and uniformly blended with 2 parts of a pasty mixture of equal amounts of bis(2-methyl-4-tri-methylsilyl benzoyl) peroxide prepared in Preparation 1 and a dimethyl silicone fluid having a viscosity of 1000 centistokes by use of a three-roller mill. The thus obtained silicone rubber composition was shaped into a sheet of 2 mm thickness which was subjected to a heat treatment in a hot air oven first at 250 °C for 3 minutes and then at 200 °C for 2 hours to effect secondary curing. The silicone rubber sheet obtained in this manner had very little surface tackiness with absolutely no voids inside and had mechanical properties of; hardness, JIS, of 50; ultimate elongation of 360%; tensile strength of 90 kg/$cm^2$; and tear strength of 15 kg/cm.

Example 2 and Comparative Example 1

An organopolysiloxane compound was prepared by uniformly blending, on a two-roller will, 100 parts of a gum-like methyl vinyl polysiloxane composed of 99.85% by moles of dimethyl siloxane units $Me_2SiO$, 0.13% by moles of methyl vinyl siloxane units MeViSiO units and 0.02% by moles of vinyl dimethyl siloxane units $ViMe_2SiO_{0.5}$, 0.2 part of vinyl trimethoxy silane, 45 parts of the same fumed silica filler as used in Example 1, 2.5 parts of diphenyl silane diol and 7 parts of a low-viscosity silicone fluid having a degree of polymerization of 10 and terminated at both molecular chain ends with hydroxy groups followed by a heat treatment in a kneader at 160 °C for 2 hours and straining through a screen of 150 mesh fineness.

A silicone rubber composition was prepared from 100 parts of the above obtained organopolysiloxane compound and 2.2 parts of a pasty mixture of equal amounts of bis(2,6-dimethyl-4-trimethylsilyl benzoyl) peroxide mixed together on a three-roller mill. For comparison, another silicone rubber composition was prepared from 100 parts of the organopolysiloxane compound and 1.5 parts of a 1:1 by weight pasty mixture of 2,4-dichlorobenzoyl peroxide and the same silicone fluid as above.

Each of the silicone rubber compositions was shaped into a sheet of 2 mm thickness which was vulcanized by heating in a hot air oven first at 350 °C for 1 minute and then at 200 °C for 2 hours to effect secondary curing. The thus obtained cured silicone rubber sheets were subjected to the measurement of the mechanical properties either as cured or after aging in steam at 175 °C for 24 hours to give the results shown in Table 1 below. The table also shows the results of the test for permanent compression set after 22 hours at 150 °C under 25% compression according to the procedure specified in JIS K 6301. Each of the cured silicone rubber sheets was free from surface tackiness and voids inside after curing at 350 °C for 1 minute.As can be concluded from the results shown in the table, the inventive silicone rubber composition gives a cured silicone rubber having a much better resistance against aging in high-temperature steam and markedly smaller

permanent compression set than the silicone rubber cured by use of 2,4-dichlorobenzoyl peroxide although the mechanical strengths of the silicone rubbers as cured are about equivalent.

Table 1

| | Example 2 | | Comparative Example 1 | |
|---|---|---|---|---|
| | As cured | After aging | As cured | After aging |
| Hardness, JIS | 54 | 50 (-4) | 54 | 44 (-10) |
| Ultimate elongation, % | 320 | 305 (-5%) | 330 | 410 (+24%) |
| Tensile strength, $Kg/cm^2$ | 115 | 87 (-24%) | 110 | 38 (-65%) |
| Tear strength, kg/cm | 14 | - | 15 | - |
| Permanent compression set, % | 27 | - | 54 | - |

## Claims

1. A silicone rubber composition which comprises, in admixture:

(A) an organopolysiloxane represented by the average unit formula

$R^1{}_aR^2{}_bSiO_{(4-a-b)/2}$,

in which $R^1$ is a monovalent hydrocarbon group free from aliphatic unsaturation, $R^2$ is an alkenyl group, the subscript a is a positive number in the range from 1.8 to 2.2 and the subscript b is zero or a positive number not exceeding 0.1; and

(B) an organosilyl-substituted benzoyl peroxide compound represented by the general formula

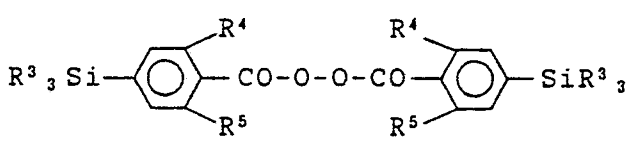
,

in which each $R^3$ is, independently from the others, a monovalent hydrocarbon group, each $R^4$ is, independently from the other, a hydrogen atom, methyl group, ethyl group, methoxy group or ethoxy group and each $R^5$ is, independently from the other, a methyl group, ethyl group, methoxy group or ethoxy group, in an amount effective to crosslink the molecules of the component (A) by heating.

2. A silicone rubber composition as claimed in claim 1, wherein the amount of the component (B) is in the range from 0.1 to 5 parts by weight per 100 parts by weight of the component (A).

3. A silicone rubber composition as claimed in claim 1 or claim 2, wherein $R^1$ is an alkyl, cycloalkyl or aryl group and/or $R^2$ is a vinyl, allyl or cyclopentadienyl group.

4. A silicone rubber composition as claimed in claim 3 wherein $R^1$ is a methyl, ethyl, propyl, butyl, cyclohexyl, phenyl or tolyl group.

5. A silicone rubber composition as claimed in any one of the preceding claims wherein b is not zero.

6. A silicone rubber composition as claimed in any one of the preceding claims wherein $R^3$ is an alkyl, alkenyl, aryl or aralkyl group.

7. A silicone rubber composition as claimed in claim 1 or claim 2, wherein the component (B) is bis(2-methyl-4-trimethylsilyl benzoyl) peroxide or bis(2,6-dimethyl-4-trimethylsilyl benzoyl) peroxide.

8. A cured silicone rubber article obtained by shaping and heating a silicone rubber composition according to any one of the preceding claims.

9. An organosilyl-substituted benzoyl peroxide compound as defined in any one of the claims 1 or 5 to 7.

10. The use of an organosilyl-substituted benzoyl peroxide as defined in any one of claims 1 to 5 or 7 as an organopolysiloxane crosslinking agent.

11. A method of making an organosilyl- substituted benzoyl peroxide as defined in any one of claims 1 to 5 or 7, comprising reacting together the corresponding benzoyl chloride and hydrogen peroxide in the presence of an acid acceptor.